(19) Europäisches Patentamt

European Patent Office

Office européen des brevets

(11) Publication number: **0 152 637 B1**

# EUROPEAN PATENT SPECIFICATION

(45) Date of publication of patent specification: **28.08.91**

(21) Application number: **84200847.6**

(22) Date of filing: **14.04.81**

(51) Int. Cl.⁵: **C04B 18/02**, C04B 2/06, C04B 18/08

(60) Publication number of the earlier application in accordance with Art.76 EPC: **0 038 599**

(54) **A process for forming granules.**

(30) Priority: **17.04.80 NL 8002251**
**17.04.80 NL 8002252**

(43) Date of publication of application:
**28.08.85 Bulletin 85/35**

(45) Publication of the grant of the patent:
**28.08.91 Bulletin 91/35**

(84) Designated Contracting States:
**BE CH DE FR GB IT LI LU NL SE**

(56) References cited:
**EP-A- 0 002 876**    **DE-C- 739 166**
**GB-A- 981 646**    **GB-A- 1 173 054**
**US-A- 1 645 891**    **US-A- 1 942 770**

(73) Proprietor: **Aardelite-Holding B.V.**
**Industrieweg 70**
**NL-8071 CW Nunspeet(NL)**

(72) Inventor: **Loggers, Hendrik**
**Prinses Beatrixlaan 37**
**NL-3958 XJ Amerongen(NL)**
Inventor: **Versteeg, Gijsbert**
**Stationslaan 55**
**NL-8071 CK Nunspeet(NL)**

(74) Representative: **van der Veken, Johannes Adriaan et al**
**EXTERPATENT B.V. P.O. Box 90649**
**NL-2509 LP 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a process of forming granules comprising at least an inorganic filler bound by an inorganic binder, by mixing said inorganic binder and said inorganic filler, forming granules and curing same by heating.

Such a process comprising heat treatment in an autoclave in a steam environment is known from EP-A-0 002 876.

This process is disadvantageous as it involves high energy costs for preparing steam of elevated temperature and must be executed under increased pressure.

Moreover, this process is complicated as it requires a plurality of steam treatments at different steam pressures involving an expensive autoclave.

It is now the aim of the invention to provide a method which does not present the abovementioned disadvantages.

This aim is attained in that said granules of an inorganic binder and an inorganic filler particularly fly ash are cured under ambient pressure at a temperature comprised between 50 and 100°C by adding said granules to be cured to a mixture of at least a calcium oxide containing substance and water so that the granules are cured by the heat provided by slaking calcium oxide, whereafter the cured granules are removed from the slaked calcium hydroxide containing mixture.

By means of the invention the heat evolved during slaking of lime is used for curing granules of inorganic filler, particularly fly ash and inorganic binder so that much energy can be saved in comparison with the prior art method and no expensive autoclave is required.

It should be noted that it is known per se to use the heat provided by slaking calcium oxide for accelerating the setting of articles formed from an inorganic binder, organic waste material, calcium oxide, water and cement (DE-C-739 166).

However, this document does not make obvious that granules of inorganic filler, particularly fly ash and an inorganic binder cured by the heat provided by slaking calcium oxide at a temperature comprised between 50 and 100°C, would meet the high standards as required for using these granules for manufacturing building articles.

In a preferred embodiment said heat for curing is obtained by mixing silica containing substances and calcium oxide and water, the quantity of calcium oxide in the mixture to be prepared amounting to more than 5%, in the presence of said granules

Under these conditions curing of the granules is excellent and Slaking of lime now proceeds very smoothly so that mixtures containing high amounts of calcium oxide can be slaked without any problem.

In this respect it should be noted that uptil now calcium oxide is mixed with sand and water in order to slake the calcium oxide whereby the sand and water absorbs heat evolved during the reaction of calcium oxide with water. However said process is unsatisfactory as a calcium ratio exceeding 10% of the mixture causes the temperature of said mixture to become too high, so that explosive steam is produced ejecting the mixture of calcium oxide and sand particles from the reaction zone, being in most cases an autoclave. The latter phenomenon is very disadvantageous as e.g. 23% of calcium oxide need be used in order to produce hydrothermally cured products containing powdered quartz.

From the foregoing follows that mixtures containing greater quantities of calcium oxide connot possibly be prepared and therefore the heat developed due to the mixing cannot be recovered at a high level; besides very great quantities of material have to be conveyed through the slaking zone which also involves a notable consumption of energy. Now, by adding the granules to be cured, the heat of slaking is mainly absorbed by these granules thereby curing said granules.

By subsequently removing said removable heat absorbing granules a mixture is finally obtained which possesses a very high calcium contents.

In this manner it is, for instance, possible to prepare mixtures of powdered quartz and calcium oxide, wherein the calcium oxide amounts to 23%. By hydrothermally curing said mixtures, moulded products having particular properties can be obtained.

In a very preferred embodiment at least a part of the filler consist of fly ash. In this way rather small amounts of inorganic binder are necessary for obtaining the desired strength of the granules as the heat evolved during slaking of calcium oxide now activitates the hydraulic binding properties of fly ash.

The use of fly ash, which is emitted on a large scale during the combustion of fossilic solid fuels, such as e.g. coal or brown coal permits the transformation of an invaluable waste into a valuable industrial product in the form of an artificial gravel suitable for use in concrete.

Although fly ash has been used as a filler in concrete, the fact has emerged that concrete containing fly ash will only possess the desired strength properties after a very long period of curing, this contrary to concrete made with cement as a hydraulic binder.

It has appeared that in the above described manner granulated material having the desired strength properties is very rapidly obtained, and said material may be used as a material replacing gravel in concrete.

Granules, which are very suitable in the process of the invention may consist of a core of a filler, such as e.g. fly ash, pyrite,plaster, carbon containing material and the like, with calcium oxide or cement and silica dioxide containing material, whereby the core, however, has insufficient strength properties in view of the employed small quantities of a binder. So as to give said particles a sufficient hardness, a mixture of calcium hydroxide and silica dioxide containing substances for instance ground sand, is spread upon the respective particles, thus providing said particles with a coating which is cured by means of the process of the invention.

The advantageous result of the invention is that a notable economy on steam will be obtained for hydrothermally curing the respective products up to the desired strength, as now the heat derived from the mixture silica and calcium oxide containing substances, is used for curing said products.

The volume weight of the granules may advantageously be controlled by introducing a foaming means or blowing means, such as casein or aluminium powder, into said heat absorbing granules, a product is then obtained having closed cells or not and a volume weight comprised between 0,3 to 1,8 kg/l.

The invention will furthermore be illustrated by means of the following examples.

EXAMPLE I

A mixture of fly ash and cement is mixed with water and granules are formed by extrusion. The granules thus obtained are added before mixing calcium oxide, water and fly ash. The heat prevailing during the slaking of calcium oxide with water, serves in this case for activating the latent hydraulic properties of the fly ash in the granules. After mixing, the granules can be sieved out and used as an aggregate for concrete.

EXAMPLE II

Granules are formed and added to a mixture of calcium oxide, water and sand, which mixture contains 35% of calcium oxide. During mixing, a large quantity of heat is evolved due to the reaction of calcium oxide and water. The mass, obtained from the mixing vessel, is subsequently sieved in order to separate the granulated material from fly ash and binder. The granules are suitable as aggregate in concrete.

The sieved out mixture sand and calcium hydroxide is subsequently further admixed with sand so as to obtain a mixture which contains approximately 5% or more of calcium oxide, whereupon calcium sandstone products are formed by a hydrothermal curing process.

EXAMPLE III

Quartz powder is mixed with a percentage of 35% of calcium oxide and is supplied to a mixing vessel. Simultaneously the quantity of water required for binding said calcium oxide is supplied, thus forming calcium hydroxide. Due to the large quantity of calcium, the temperature in the vessel will rise to over 100°C, so that sand with calcium oxide may be ejected from the mixing vessel.

In order to dispense with said problem, a quantity of removable granules obtained according to example I is supplied to the mixing vessel, simultaneously with the quartz powder and the calcium oxide. Said removable granules will absorb the exerted heat, so that a temperature of 65° will prevail in the lower side of the vessel.

The mixture obtained from the mixing vessel is supplied to a separation unit, at which location the removable granules can be recovered.

EXAMPLE IV

Example III is repeated, but in this case heat absorbing particles are applied which are obtained as follows.

An iron containing residue, derived from steel producing industries is mixed with a mixture of silica dioxide and calcium oxide, although calcium oxide only may be employed as well. The relative mixture is granulated by extruding, whereupon a mixture of ground sand is spread upon the formed granules, which mixture will then form a coating around said granules. After the respective granules have been sufficiently coated with said binder, the granulated material is used as in Example III.

EXAMPLE V

Removable granules according to example IV are employed, which granules contain a blowing means, in the form of aluminium powder. Said removable granules are in this way provided with whether or not closed cells. Their volume weight is comprised between 0,3 to 1,8 kg/l.

When aluminium powder is employed, the granules should contain calciumhydroxide in order to obtain the desired reaction between aluminium powder and calcium-hydroxide. When a foaming means, such as casein is used, particles having whether or not closed cells, are obtained as well.

**Claims**

1. Process of forming granules comprising at least an inorganic filler bound by an inorganic binder, by mixing said inorganic binder and said inorganic filler, forming granules and curing same by heating, characterized in that said granules of an inorganic binder and an inorganic filler, particularly fly ash, are cured under ambient pressure at a temperature comprised between 50 and 100°C by adding said granules to be cured to a mixture of at least a calcium oxide containing substance and water so that the granules are cured by the heat provided by slaking calcium oxide, whereafter the cured granules are removed from the slaked calcium hydroxide containing mixture.

2. Process according to claim 1, characterized in that the granules are heated to about 95°C.

3. Process according to claim 1 or 2, characterized in that said heat for curing is obtained by mixing silica containing substances and calcium oxide and water, the quantity of calcium oxide in the mixture to be prepared amounting to more than 5%, in the presence of said granules.

4. Process according to claim 3, characterized in that 35% of calcium oxide is present in the mixture.

## Revendications

1. Procédé de formation de granules comprenant au moins une matière de charge inorganique agglutinée par un liant inorganique, par mélange dudit liant inorganique et de ladite charge inorganique, formation de granules et durcissement de ceux-ci par chauffage, caractérisé en ce que lesdits granules d'un liant inorganique et d'une charge inorganique, en particulier de cendre volante, sont durcis sous la pression ambiante a une température comprise entre 50 et 100° C, par addition desdits granules à durcir à un mélange d'au moins une substance contenant de l'oxyde de calcium et d'eau, ce qui fait que les granules sont durcis par la chaleur fournie par l'extinction de l'oxyde de calcium, après quoi les granules durcis sont extraits du mélange contenant de l'hydroxyde de calcium éteint.

2. Procédé selon la revendication 1, caractérisé en ce que les granules sont chauffés a 95° C environ.

3. Procédé selon la revendication 1 ou 2, caractérisé en ce que ladite chaleur pour le durcissement est obtenue en mélangeant des substances contenant de la silice, de l'oxyde de calcium et de l'eau, la quantité d'oxyde de calcium dans le mélange à préparer s'élevant à plus de 5%, en présence desdits granules.

4. Procédé selon la revendication 3, caractérisé en ce que l'oxyde de calcium est présent dans le mélange à raison de 35%.

## Patentansprüche

1. Verfahren zum Formen von Körnern, die mindestens ein anorganisches Füllmittel umfassen, das durch ein anorganisches Bindemittel gebunden ist, durch Mischen des anorganischen Bindemittels und des anorganischen Füllmittels, Formen der Körner und Härten derselben durch Erhitzen, dadurch gekennzeichnet, daß die Körner aus einem anorganischen Bindemittel und einem anorganischen Füllmittel, insbesondere Flugasche, unter Umgebungsdruck bei einer Temperatur zwischen 50 und 100° C gehärtet werden, indem man die zu härtenden Körner einer Mischung aus mindestens einer calciumoxidhaltigen Substanz und Wasser zusetzt, so daß die Körner durch die Wärme gehärtet werden, die durch das ablöschende Calciumoxid gebildet wird, worauf die gehärteten Körner aus der das gelöschte Calciumhydroxid enthaltenden Mischung entfernt werden.

2. Verfahren gemäß Anspruch 1, dadurch gekennzeichnet, daß die Körner auf etwa 95° C erhitzt werden.

3. Verfahren gemäß Anspruch 1 oder 2, dadurch gekennzeichnet, daß die Wärme zum Härten erhalten wird, indem man Siliciumdioxid enthaltende Substanzen und Calciumoxid und Wasser in Gegenwart der Körner mischt, wobei die Calciumoxidmenge in der herzustellenden Mischung mehr als 5 % beträgt.

4. Verfahren gemäß Anspruch 3, dadurch gekennzeichnet, daß 35 % Calciumoxid in der Mischung vorliegen.